# EUROPEAN PATENT APPLICATION

(11) **EP 3 462 718 A1**
(43) Date of publication of application: **03.04.2019**
(21) Application number: 18197751.3
(22) Date of filing: 28.09.2018
(51) Int. Cl.: H04M 1/60, H04R 3/00

(54) **MOBILE TERMINAL**

(30) Priority: 29.09.2017 KR 20170127592
(71) Applicant: LG Electronics Inc., Yeongdeungpo-Gu SEOUL 07336 (KR)
(72) Inventor: SHIM, Bonggu, 06772 Seoul (KR); SEO, Heungsik, 06772 Seoul (KR); SON, Youngjoo, 06772 Seoul (KR); SONG, Hosung, 06772 Seoul (KR); YI, Wonsang, 06772 Seoul (KR)
(74) Representative: Vossius & Partner Patentanwälte Rechtsanwälte mbB

(57) **Abstract**

A mobile terminal (100) according to the present invention connects an output stage of a receiver (10) to an input stage of a speaker amp (30) and compensates for a distortion of a signal (AS1) input to a microphone (20), where the signal (AS1) exceeds Acoustic Overload Point of the microphone (20) by using an external audio signal (AS2) received by the receiver (10) in a recording mode, thereby generating distortion-free recording contents (AS).

## Description

The present invention relates to a mobile terminal. More specifically, the present invention relates to a mobile terminal capable of securing distortion-free recording quality even when magnitude of an external audio signal is larger than a predetermined magnitude.

Mobile terminals have become increasingly more functional. Examples of such functions include data and voice communications, capturing images and video via a camera, recording audio, playing music files via a speaker system, and displaying images and video on a display. Some mobile terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements, as well as changes and improvements in the structural components.

In particular, suppose a user shoots a video outdoors, for example, in an outdoor concert hall. Since magnitude of a sound signal that may be received by a microphone of a mobile terminal is limited, if the microphone receives a sound with a large magnitude, a distorted sound may be generated when a recorded video is played.

The invention is defined in the claims. According to an aspect, the invention provides a mobile terminal configured to record an external audio signal, comprising: a microphone configured to receive the external audio signal to generate a first audio signal, the microphone having a prescribed Acoustic Overload Point (AOP); a receiver configured for receiving voice audio during a call, the receiver configured to receive the external audio signal to generate a second audio signal; a speaker amplifier coupled to the receiver and having an input stage that is connected to an output stage of the receiver and configured to amplify the second audio signal to a prescribed magnitude; and a controller configured to synthesize the first audio signal and the second audio signal, wherein the controller determines whether a level of the first audio signal at the microphone is greater than the prescribed AOP such that clipping occurs in the first audio signal, and generates the third audio signal by compensating for clipping in the first audio signal by using the second audio signal from the receiver.

The mobile terminal may further comprise an audio codec configured to convert an analog external audio signal received from the speaker amplifier to a digital signal.

The mobile terminal may further comprise a recording module that records the external audio signal, the recording module including a camera that includes the microphone and contents generated by the recording module includes video content recorded through the camera.

The recording module may be configured to be integrated with the microphone to record a user's voice.

The prescribed AOP may range from 130 dB to 135 dB.

The speaker amplifier may include a feedback circuit that is connected to an input stage of the speaker and an output of the speaker amplifier, and configured to detect a magnitude of the amplified second audio signal, compare the detected amplified second audio signal with a threshold output of the speaker, and control the magnitude of the second audio signal.

When an input for playing recorded contents is received, the controller may be configured to output the third output signal which is compensated for clipping through the speaker.

The mobile terminal may further comprise a storage configured to store the first audio signal and the second audio signal, wherein the controller is configured to store the first audio signal itself as a recording signal when magnitude of the first audio signal is less than the prescribed AOP.

The receiver may be configured to output audio during a call.

The microphone may be integrated with a video camera and configured to receive the external audio signals corresponding to recorded video.

A size of a diaphragm of the receiver may be greater than a size of a diaphragm of the microphone.

The receiver may be configured to operate in a voice call mode and an external audio recording mode, wherein the controller is configured to activate the speaker amplifier in the external audio recording mode and deactivate the speaker amplifier in the voice call mode.

When the level of first audio signal is less than the AOP of the microphone, the first audio signal may be stored as a recording of the external audio signal, and when the level of the first audio signal is greater than the AOP of the microphone, the first audio signal may be synthesized with the second audio signal and the third audio signal is stored as a recording of the external audio signal.

Embodiments will be described in detail with reference to the following drawings in which like reference numerals refer to like elements and wherein:
FIG. 1A is a block diagram of a mobile terminal in accordance with the present disclosure;
FIGS. 1B and 1C are conceptual views of one example of the mobile terminal, viewed from different directions;
FIG. 2 illustrates a distortion rate of a sound signal according to the magnitude of AOP;
FIG. 3 illustrates peak magnitude of an audio signal generated according to an external audio signal source to be recorded;
FIG. 4 is a block diagram of a mobile terminal performing an operation of compensating for a distorted input by using a signal delivered to a receiver according to one embodiment of the present invention;
FIG. 5 illustrates in more detail a connection layout between a receiver and a speaker amp according to one embodiment of the present invention; and
FIG. 6 is a flow diagram of a method for controlling a mobile terminal generating a normal signal by compensating for signal distortions on the basis of an audio signal received by a receiver of the mobile terminal according to one embodiment of the present invention.

### DETAILED DESCRIPTION

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context. Terms such as "include" or "has" are used herein and should be understood that they are intended to indicate an existence of several components, functions or steps, disclosed in the specification, and it is also understood that greater or fewer components, functions, or steps may likewise be utilized.

Mobile terminals presented herein may be implemented using a variety of different types of terminals. Examples of such terminals include cellular phones, smart phones, user equipment, laptop computers, digital broadcast terminals, personal digital assistants (PDAs), portable multimedia players (PMPs), navigators, portable computers (PCs), slate PCs, tablet PCs, ultra books, wearable devices (for example, smart watches, smart glasses, head mounted displays (HMDs)), and the like.

By way of non-limiting example only, further description will be made with reference to particular types of mobile terminals. However, such teachings apply equally to other types of terminals, such as those types noted above. In addition, these teachings may also be applied to stationary terminals such as digital TV, desktop computers, and the like.

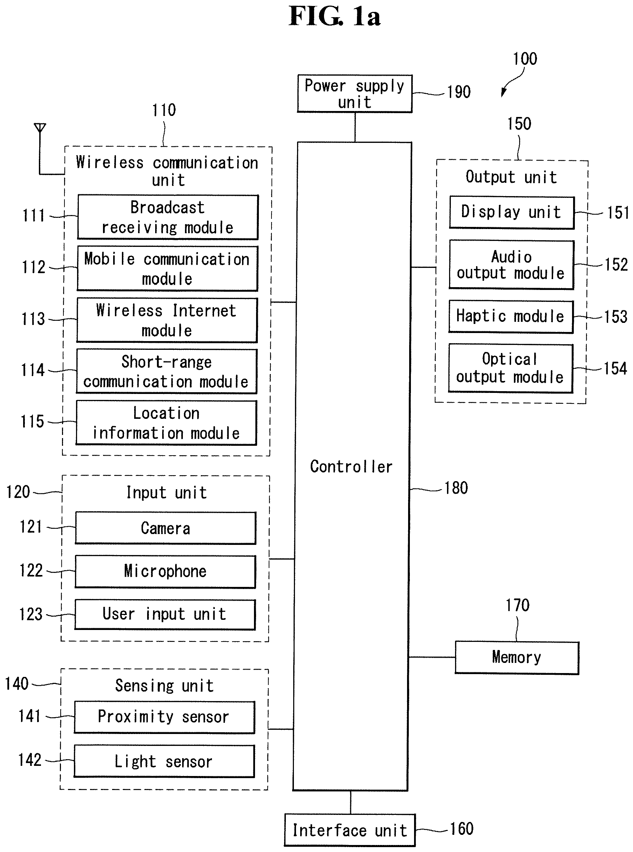

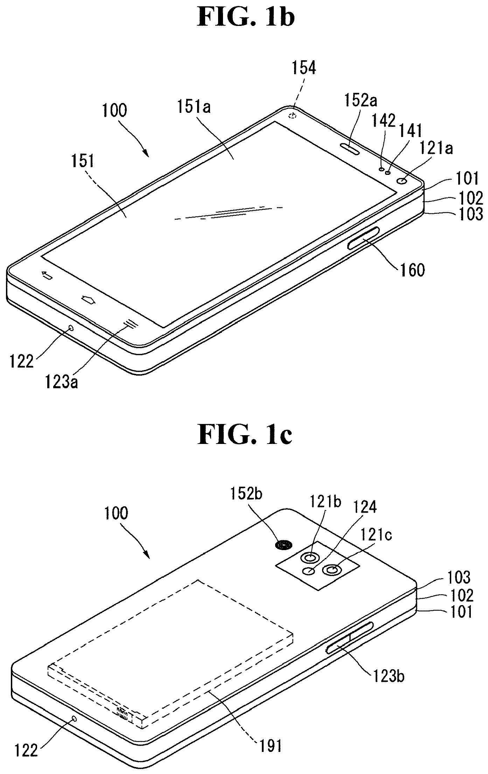

FIG. 1 is a block diagram of a mobile terminal in accordance with the present disclosure.

The mobile terminal 100 is shown having components such as a wireless communication unit 110, an input unit 120, a sensing unit 140, an output unit 150, an interface unit 160, a memory 170, a controller 180, and a power supply unit 190. It is understood that implementing all of the illustrated components is not a requirement, and that greater or fewer components may alternatively be implemented.

Referring now to FIG. 1, the mobile terminal 100 is shown having wireless communication unit 110 configured with several commonly implemented components. For instance, the wireless communication unit 110 typically includes one or more components which permit wireless communication between the mobile terminal 100 and a wireless communication system or network within which the mobile terminal is located.

The wireless communication unit 110 typically includes one or more modules which permit communications such as wireless communications between the mobile terminal 100 and a wireless communication system, communications between the mobile terminal 100 and another mobile terminal, communications between the mobile terminal 100 and an external server. Further, the wireless communication unit 110 typically includes one or more modules which connect the mobile terminal 100 to one or more networks. To facilitate such communications, the wireless communication unit 110 includes one or more of a broadcast receiving module 111, a mobile communication module 112, a wireless Internet module 113, a short-range communication module 114, and a location information module 115.

The input unit 120 includes a camera 121 for obtaining images or video, a microphone 122, which is one type of audio input device for inputting an audio signal, and a user input unit 123 (for example, a touch key, a push key, a mechanical key, a soft key, and the like) for allowing a user to input information. Data (for example, audio, video, image, and the like) is obtained by the input unit 120 and may be analyzed and processed by controller 180 according to device parameters, user commands, and combinations thereof.

The sensing unit 140 is typically implemented using one or more sensors configured to sense internal information of the mobile terminal, the surrounding environment of the mobile terminal, user information, and the like. For example, in FIG. 1, the sensing unit 140 is shown having a proximity sensor 141 and an illumination sensor 142.

If desired, the sensing unit 140 may alternatively or additionally include other types of sensors or devices, such as proximity sensor(141), illumination sensor(142), a touch sensor, an acceleration sensor(144), a magnetic sensor, a G-sensor, a gyroscope sensor(143), a motion sensor, an RGB sensor, an infrared (IR) sensor, a force sensor(145), a finger scan sensor, a ultrasonic sensor, an optical sensor (for example, camera 121), a microphone 122, a battery gauge, an environment sensor (for example, a barometer, a hygrometer, a thermometer, a radiation detection sensor, a thermal sensor, and a gas sensor, among others), and a chemical sensor (for example, an electronic nose, a health care sensor, a biometric sensor, and the like), to name a few. The mobile terminal 100 may be configured to utilize information obtained from sensing unit 140, and in particular, information obtained from one or more sensors of the sensing unit 140, and combinations thereof.

The output unit 150 is typically configured to output various types of information, such as audio, video, tactile output, and the like. The output unit 150 is shown having a display unit 151, an audio output module 152, a haptic module 153, and an optical output module 154.

The display unit 151 may have an inter-layered structure or an integrated structure with a touch sensor in order to facilitate a touch screen. The touch screen may provide an output interface between the mobile terminal 100 and a user, as well as function as the user input unit 123 which provides an input interface between the mobile terminal 100 and the user.

The interface unit 160 serves as an interface with various types of external devices that can be coupled to the mobile terminal 100. The interface unit 160, for example, may include any of wired or wireless ports, external power supply ports, wired or wireless data ports, memory card ports, ports for connecting a device having an identification module, audio input/output (I/O) ports, video I/O ports, earphone ports, and the like. In some cases, the mobile terminal 100 may perform assorted control functions associated with a connected external device, in response to the external device being connected to the interface unit 160.

The memory 170 is typically implemented to store data to support various functions or features of the mobile terminal 100. For instance, the memory 170 may be configured to store application programs executed in the mobile terminal 100, data or instructions for operations of the mobile terminal 100, and the like. Some of these application programs may be downloaded from an external server via wireless communication. Other application programs may be installed within the mobile terminal 100 at time of manufacturing or shipping, which is typically the case for basic functions of the mobile terminal 100 (for example, receiving a call, placing a call, receiving a message, sending a message, and the like). It is common for application programs to be stored in the memory 170, installed in the mobile terminal 100, and executed by the controller 180 to perform an operation (or function) for the mobile terminal 100.

The controller 180 typically functions to control overall operation of the mobile terminal 100, in addition to the operations associated with the application programs. The controller 180 may provide or process information or functions appropriate for a user by processing signals, data, information and the like, which are input or output by the various components depicted in FIG. 1, or activating application programs stored in the memory 170. As one example, the controller 180 controls some or all of the components illustrated in FIGS. 1A-1C according to the execution of an application program that have been stored in the memory 170.

The power supply unit 190 can be configured to receive external power or provide internal power in order to supply appropriate power required for operating elements and components included in the mobile terminal 100. The power supply unit 190 may include a battery, and the battery may be configured to be embedded in the terminal body, or configured to be detachable from the terminal body.

Referring still to FIG. 1a, various components depicted in this figure will now be described in more detail. Regarding the wireless communication unit 110, the broadcast receiving module 111 is typically configured to receive a broadcast signal and/or broadcast associated information from an external broadcast managing entity via a broadcast channel. The broadcast channel may include a satellite channel, a terrestrial channel, or both. In some embodiments, two or more broadcast receiving modules 111 may be utilized to facilitate simultaneously receiving of two or more broadcast channels, or to support switching among broadcast channels.

The mobile communication module 112 can transmit and/or receive wireless signals to and from one or more network entities. Typical examples of a network entity include a base station, an external mobile terminal, a server, and the like. Such network entities form part of a mobile communication network, which is constructed according to technical standards or communication methods for mobile communications (for example, Global System for Mobile Communication (GSM), Code Division Multi Access (CDMA), CDMA2000(Code Division Multi Access 2000), EV-DO(Enhanced Voice-Data Optimized or Enhanced Voice-Data Only), Wideband CDMA (WCDMA), High Speed Downlink Packet access (HSDPA), HSUPA(High Speed Uplink Packet Access), Long Term Evolution (LTE) , LTE-A(Long Term Evolution-Advanced), and the like). Examples of wireless signals transmitted and/or received via the mobile communication module 112 include audio call signals, video (telephony) call signals, or various formats of data to support communication of text and multimedia messages.

The wireless Internet module 113 is configured to facilitate wireless Internet access. This module may be internally or externally coupled to the mobile terminal 100. The wireless Internet module 113 may transmit and/or receive wireless signals via communication networks according to wireless Internet technologies.

Examples of such wireless Internet access include Wireless LAN (WLAN), Wireless Fidelity (Wi-Fi), Wi-Fi Direct, Digital Living Network Alliance (DLNA), Wireless Broadband (WiBro), Worldwide Interoperability for Microwave Access (WiMAX), High Speed Downlink Packet Access (HSDPA), HSUPA(High Speed Uplink Packet Access), Long Term Evolution (LTE), LTE-A(Long Term Evolution-Advanced), and the like. The wireless Internet module 113 may transmit/receive data according to one or more of such wireless Internet technologies, and other Internet technologies as well.

In some embodiments, when the wireless Internet access is implemented according to, for example, WiBro, HSDPA,HSUPA, GSM, CDMA, WCDMA, LTE, LTE-A and the like, as part of a mobile communication network, the wireless Internet module 113 performs such wireless Internet access. As such, the Internet module 113 may cooperate with, or function as, the mobile communication module 112.

The short-range communication module 114 is configured to facilitate short-range communications. Suitable technologies for implementing such short-range communications include BLUETOOTHTM, Radio Frequency IDentification (RFID), Infrared Data Association (IrDA), Ultra-WideBand (UWB), ZigBee, Near Field Communication (NFC), Wireless-Fidelity (Wi-Fi), Wi-Fi Direct, Wireless USB(Wireless Universal Serial Bus), and the like. The short-range communication module 114 in general supports wireless communications between the mobile terminal 100 and a wireless communication system, communications between the mobile terminal 100 and another mobile terminal 100, or communications between the mobile terminal and a network where another mobile terminal 100 (or an external server) is located, via wireless area networks. One example of the wireless area networks is a wireless personal area networks.

In some embodiments, another mobile terminal (which may be configured similarly to mobile terminal 100) may be a wearable device, for example, a smart watch, a smart glass or a head mounted display (HMD), which is able to exchange data with the mobile terminal 100 (or otherwise cooperate with the mobile terminal 100). The short-range communication module 114 may sense or recognize the wearable device, and permit communication between the wearable device and the mobile terminal 100. In addition, when the sensed wearable device is a device which is authenticated to communicate with the mobile terminal 100, the controller 180, for example, may cause transmission of data processed in the mobile terminal 100 to the wearable device via the short-range communication module 114. Hence, a user of the wearable device may use the data processed in the mobile terminal 100 on the wearable device. For example, when a call is received in the mobile terminal 100, the user may answer the call using the wearable device. Also, when a message is received in the mobile terminal 100, the user can check the received message using the wearable device.

The location information module 115 is generally configured to detect, calculate, derive or otherwise identify a position of the mobile terminal. As an example, the location information module 115 includes a Global Position System (GPS) module, a Wi-Fi module, or both. If desired, the location information module 115 may alternatively or additionally function with any of the other modules of the wireless communication unit 110 to obtain data related to the position of the mobile terminal.

As one example, when the mobile terminal uses a GPS module, a position of the mobile terminal may be acquired using a signal sent from a GPS satellite. As another example, when the mobile terminal uses the Wi-Fi module, a position of the mobile terminal can be acquired based on information related to a wireless access point (AP) which transmits or receives a wireless signal to or from the Wi-Fi module.

The input unit 120 may be configured to permit various types of input to the mobile terminal 120. Examples of such input include audio, image, video, data, and user input. Image and video input is often obtained using one or more cameras 121. Such cameras 121 may process image frames of still pictures or video obtained by image sensors in a video or image capture mode. The processed image frames can be displayed on the display unit 151 or stored in memory 170. In some cases, the cameras 121 may be arranged in a matrix configuration to permit a plurality of images having various angles or focal points to be input to the mobile terminal 100. As another example, the cameras 121 may be located in a stereoscopic arrangement to acquire left and right images for implementing a stereoscopic image.

The microphone 122 is generally implemented to permit audio input to the mobile terminal 100. The audio input can be processed in various manners according to a function being executed in the mobile terminal 100. If desired, the microphone 122 may include assorted noise removing algorithms to remove unwanted noise generated in the course of receiving the external audio.

The user input unit 123 is a component that permits input by a user. Such user input may enable the controller 180 to control operation of the mobile terminal 100. The user input unit 123 may include one or more of a mechanical input element (for example, a key, a button located on a front and/or rear surface or a side surface of the mobile terminal 100, a dome switch, a jog wheel, a jog switch, and the like), or a touch-sensitive input, among others. As one example, the touch-sensitive input may be a virtual key or a soft key, which is displayed on a touch screen through software processing, or a touch key which is located on the mobile terminal at a location that is other than the touch screen. On the other hand, the virtual key or the visual key may be displayed on the touch screen in various shapes, for example, graphic, text, icon, video, or a combination thereof.

The sensing unit 140 is generally configured to sense one or more of internal information of the mobile terminal, surrounding environment information of the mobile terminal, user information, or the like. The controller 180 generally cooperates with the sending unit 140 to control operation of the mobile terminal 100 or execute data processing, a function or an operation associated with an application program installed in the mobile terminal based on the sensing provided by the sensing unit 140. The sensing unit 140 may be implemented using any of a variety of sensors, some of which will now be described in more detail.

The proximity sensor 141 may include a sensor to sense presence or absence of an object approaching a surface, or an object located near a surface, by using an electromagnetic field, infrared rays, or the like without a mechanical contact. The proximity sensor 141 may be arranged at an inner region of the mobile terminal covered by the touch screen, or near the touch screen.

The proximity sensor 141, for example, may include any of a transmissive type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like. When the touch screen is implemented as a capacitance type, the proximity sensor 141 can sense proximity of a pointer relative to the touch screen by changes of an electromagnetic field, which is responsive to an approach of an object with conductivity. In this case, the touch screen (touch sensor) may also be categorized as a proximity sensor.

The term "proximity touch" will often be referred to herein to denote the scenario in which a pointer is positioned to be proximate to the touch screen without contacting the touch screen. The term "contact touch" will often be referred to herein to denote the scenario in which a pointer makes physical contact with the touch screen. For the position corresponding to the proximity touch of the pointer relative to the touch screen, such position will correspond to a position where the pointer is perpendicular to the touch screen. The proximity sensor 141 may sense proximity touch, and proximity touch patterns (for example, distance, direction, speed, time, position, moving status, and the like).

In general, controller 180 processes data corresponding to proximity touches and proximity touch patterns sensed by the proximity sensor 141, and cause output of visual information on the touch screen. In addition, the controller 180 can control the mobile terminal 100 to execute different operations or process different data according to whether a touch with respect to a point on the touch screen is either a proximity touch or a contact touch.

A touch sensor can sense a touch applied to the touch screen, such as display unit 151, using any of a variety of touch methods. Examples of such touch methods include a resistive type, a capacitive type, an infrared type, and a magnetic field type, among others.

As one example, the touch sensor may be configured to convert changes of pressure applied to a specific part of the display unit 151, or convert capacitance occurring at a specific part of the display unit 151, into electric input signals. The touch sensor may also be configured to sense not only a touched position and a touched area, but also touch pressure and/or touch capacitance. A touch object is generally used to apply a touch input to the touch sensor. Examples of typical touch objects include a finger, a touch pen, a stylus pen, a pointer, or the like.

When a touch input is sensed by a touch sensor, corresponding signals may be transmitted to a touch controller. The touch controller may process the received signals, and then transmit corresponding data to the controller 180. Accordingly, the controller 180 may sense which region of the display unit 151 has been touched. Here, the touch controller may be a component separate from the controller 180, the controller 180, and combinations thereof.

In some embodiments, the controller 180 may execute the same or different controls according to a type of touch object that touches the touch screen or a touch key provided in addition to the touch screen. Whether to execute the same or different control according to the object which provides a touch input may be decided based on a current operating state of the mobile terminal 100 or a currently executed application program, for example.

The touch sensor and the proximity sensor may be implemented individually, or in combination, to sense various types of touches. Such touches include a short (or tap) touch, a long touch, a multi-touch, a drag touch, a flick touch, a pinch-in touch, a pinch-out touch, a swipe touch, a hovering touch, and the like.

If desired, an ultrasonic sensor may be implemented to recognize position information relating to a touch object using ultrasonic waves. The controller 180, for example, may calculate a position of a wave generation source based on information sensed by an illumination sensor and a plurality of ultrasonic sensors. Since light is much faster than ultrasonic waves, the time for which the light reaches the optical sensor is much shorter than the time for which the ultrasonic wave reaches the ultrasonic sensor. The position of the wave generation source may be calculated using this fact. For instance, the position of the wave generation source may be calculated using the time difference from the time that the ultrasonic wave reaches the sensor based on the light as a reference signal.

The camera 121 typically includes at least one a camera sensor (CCD, CMOS etc.), a photo sensor (or image sensors), and a laser sensor.

Implementing the camera 121 with a laser sensor may allow detection of a touch of a physical object with respect to a 3D stereoscopic image. The photo sensor may be laminated on, or overlapped with, the display device. The photo sensor may be configured to scan movement of the physical object in proximity to the touch screen. In more detail, the photo sensor may include photo diodes and transistors at rows and columns to scan content received at the photo sensor using an electrical signal which changes according to the quantity of applied light. Namely, the photo sensor may calculate the coordinates of the physical object according to variation of light to thus obtain position information of the physical object.

The display unit 151 is generally configured to output information processed in the mobile terminal 100. For example, the display unit 151 may display execution screen information of an application program executing at the mobile terminal 100 or user interface (Ul) and graphic user interface (GUI) information in response to the execution screen information.

In some embodiments, the display unit 151 may be implemented as a stereoscopic display unit for displaying stereoscopic images. A typical stereoscopic display unit may employ a stereoscopic display scheme such as a stereoscopic scheme (a glass scheme), an auto-stereoscopic scheme (glassless scheme), a projection scheme (holographic scheme), or the like.

The audio output module 152 is generally configured to output audio data. Such audio data may be obtained from any of a number of different sources, such that the audio data may be received from the wireless communication unit 110 or may have been stored in the memory 170. The audio data may be output during modes such as a signal reception mode, a call mode, a record mode, a voice recognition mode, a broadcast reception mode, and the like. The audio output module 152 can provide audible output related to a particular function (e.g., a call signal reception sound, a message reception sound, etc.) performed by the mobile terminal 100. The audio output module 152 may also be implemented as a receiver, a speaker, a buzzer, or the like.

A haptic module 153 can be configured to generate various tactile effects that a user feels, perceive, or otherwise experience. A typical example of a tactile effect generated by the haptic module 153 is vibration. The strength, pattern and the like of the vibration generated by the haptic module 153 can be controlled by user selection or setting by the controller. For example, the haptic module 153 may output different vibrations in a combining manner or a sequential manner.

Besides vibration, the haptic module 153 can generate various other tactile effects, including an effect by stimulation such as a pin arrangement vertically moving to contact skin, a spray force or suction force of air through a jet orifice or a suction opening, a touch to the skin, a contact of an electrode, electrostatic force, an effect by reproducing the sense of cold and warmth using an element that can absorb or generate heat, and the like.

The haptic module 153 can also be implemented to allow the user to feel a tactile effect through a muscle sensation such as the user's fingers or arm, as well as transferring the tactile effect through direct contact. Two or more haptic modules 153 may be provided according to the particular configuration of the mobile terminal 100.

An optical output module 154 can output a signal for indicating an event generation using light of a light source. Examples of events generated in the mobile terminal 100 may include message reception, call signal reception, a missed call, an alarm, a schedule notice, an email reception, information reception through an application, and the like.

A signal output by the optical output module 154 may be implemented in such a manner that the mobile terminal emits monochromatic light or light with a plurality of colors. The signal output may be terminated as the mobile terminal senses that a user has checked the generated event, for example.

The interface unit 160 serves as an interface for external devices to be connected with the mobile terminal 100. For example, the interface unit 160 can receive data transmitted from an external device, receive power to transfer to elements and components within the mobile terminal 100, or transmit internal data of the mobile terminal 100 to such external device. The interface unit 160 may include wired or wireless headset ports, external power supply ports, wired or wireless data ports, memory card ports, ports for connecting a device having an identification module, audio input/output (I/O) ports, video I/O ports, earphone ports, or the like.

The identification module may be a chip that stores various information for authenticating authority of using the mobile terminal 100 and may include a user identity module (UIM), a subscriber identity module (SIM), a universal subscriber identity module (USIM), and the like. In addition, the device having the identification module (also referred to herein as an "identifying device") may take the form of a smart card. Accordingly, the identifying device can be connected with the terminal 100 via the interface unit 160.

When the mobile terminal 100 is connected with an external cradle, the interface unit 160 can serve as a passage to allow power from the cradle to be supplied to the mobile terminal 100 or may serve as a passage to allow various command signals input by the user from the cradle to be transferred to the mobile terminal there through. Various command signals or power input from the cradle may operate as signals for recognizing that the mobile terminal is properly mounted on the cradle.

The memory 170 can store programs to support operations of the controller 180 and store input/output data (for example, phonebook, messages, still images, videos, etc.). The memory 170 may store data related to various patterns of vibrations and audio which are output in response to touch inputs on the touch screen.

The memory 170 may include one or more types of storage mediums including a Flash memory, a hard disk, a solid state disk, a silicon disk, a multimedia card micro type, a card-type memory (e.g., SD or DX memory, etc), a Random Access Memory (RAM), a Static Random Access Memory (SRAM), a Read-Only Memory (ROM), an Electrically Erasable Programmable Read-Only Memory (EEPROM), a Programmable Read-Only memory (PROM), a magnetic memory, a magnetic disk, an optical disk, and the like. The mobile terminal 100 may also be operated in relation to a network storage device that performs the storage function of the memory 170 over a network, such as the Internet.

The controller 180 may typically control the general operations of the mobile terminal 100. For example, the controller 180 may set or release a lock state for restricting a user from inputting a control command with respect to applications when a status of the mobile terminal meets a preset condition.

The controller 180 can also perform the controlling and processing associated with voice calls, data communications, video calls, and the like, or perform pattern recognition processing to recognize a handwriting input or a picture drawing input performed on the touch screen as characters or images, respectively. In addition, the controller 180 can control one or a combination of those components in order to implement various exemplary embodiments disclosed herein.

The power supply unit 190 receives external power or provide internal power and supply the appropriate power required for operating respective elements and components included in the mobile terminal 100. The power supply unit 190 may include a battery, which is typically rechargeable or be detachably coupled to the terminal body for charging.

The power supply unit 190 may include a connection port. The connection port may be configured as one example of the interface unit 160 to which an external charger for supplying power to recharge the battery is electrically connected.

As another example, the power supply unit 190 may be configured to recharge the battery in a wireless manner without use of the connection port. In this example, the power supply unit 190 can receive power, transferred from an external wireless power transmitter, using at least one of an inductive coupling method which is based on magnetic induction or a magnetic resonance coupling method which is based on electromagnetic resonance.

Various embodiments described herein may be implemented in a computer-readable medium, a machine-readable medium, or similar medium using, for example, software, hardware, or any combination thereof.

Referring now to FIGS. 1B and 1C, the mobile terminal 100 is described with reference to a bar-type terminal body. However, the mobile terminal 100 may alternatively be implemented in any of a variety of different configurations. Examples of such configurations include watch-type, clip-type, glasses-type, or as a folder-type, flip-type, slide-type, swing-type, and swivel-type in which two and more bodies are combined with each other in a relatively movable manner, and combinations thereof. Discussion herein will often relate to a particular type of mobile terminal (for example, bar-type, watch-type, glasses-type, and the like). However, such teachings with regard to a particular type of mobile terminal will generally apply to other types of mobile terminals as well.

The mobile terminal 100 will generally include a case (for example, frame, housing, cover, and the like) forming the appearance of the terminal. In this embodiment, the case is formed using a front case 101 and a rear case 102. Various electronic components are incorporated into a space formed between the front case 101 and the rear case 102. At least one middle case may be additionally positioned between the front case 101 and the rear case 102.

The display unit 151 is shown located on the front side of the terminal body to output information. As illustrated, a window 151a of the display unit 151 may be mounted to the front case 101 to form the front surface of the terminal body together with the front case 101.

In some embodiments, electronic components may also be mounted to the rear case 102. Examples of such electronic components include a detachable battery 191, an identification module, a memory card, and the like. Rear cover 103 is shown covering the electronic components, and this cover may be detachably coupled to the rear case 102. Therefore, when the rear cover 103 is detached from the rear case 102, the electronic components mounted to the rear case 102 are externally exposed.

As illustrated, when the rear cover 103 is coupled to the rear case 102, a side surface of the rear case 102 is partially exposed. In some cases, upon the coupling, the rear case 102 may also be completely shielded by the rear cover 103. In some embodiments, the rear cover 103 may include an opening for externally exposing a camera 121b or an audio output module 152b.

The cases 101, 102, 103 may be formed by injection-molding synthetic resin or may be formed of a metal, for example, stainless steel (STS), aluminum (Al), titanium (Ti), or the like.

As an alternative to the example in which the plurality of cases form an inner space for accommodating components, the mobile terminal 100 may be configured such that one case forms the inner space. In this example, a mobile terminal 100 having a uni-body is formed in such a manner that synthetic resin or metal extends from a side surface to a rear surface.

If desired, the mobile terminal 100 may include a waterproofing unit (not shown) for preventing introduction of water into the terminal body. For example, the waterproofing unit may include a waterproofing member which is located between the window 151a and the front case 101, between the front case 101 and the rear case 102, or between the rear case 102 and the rear cover 103, to hermetically seal an inner space when those cases are coupled.

The mobile terminal includes a display unit 151, a first and a second audio output modules 151a/151b, a proximity sensor 141, an illumination sensor 142, an optical output module 154, a first and a second cameras 121a/121b, a first and a second manipulation units 123a/123b, a microphone 122, interface unit 160 and the like.

It will be described for the mobile terminal as shown in FIGS. 1B and 1C. The display unit 151, the first audio output module 151a, the proximity sensor 141, an illumination sensor 142, the optical output module 154, the first camera 121a and the first manipulation unit 123a are arranged in front surface of the terminal body, the second manipulation unit 123b, the microphone 122 and interface unit 160 are arranged in side surface of the terminal body, and the second audio output modules 151b and the second camera 121b are arranged in rear surface of the terminal body.

However, it is to be understood that alternative arrangements are possible and within the teachings of the instant disclosure. Some components may be omitted or rearranged. For example, the first manipulation unit 123a may be located on another surface of the terminal body, and the second audio output module 152b may be located on the side surface of the terminal body.

The display unit 151 outputs information processed in the mobile terminal 100. The display unit 151 may be implemented using one or more suitable display devices. Examples of such suitable display devices include a liquid crystal display (LCD), a thin film transistor-liquid crystal display (TFT-LCD), an organic light emitting diode (OLED), a flexible display, a 3-dimensional (3D) display, an e-ink display, and combinations thereof.

The display unit 151 may be implemented using two display devices, which can implement the same or different display technology. For instance, a plurality of the display units 151 may be arranged on one side, either spaced apart from each other, or these devices may be integrated, or these devices may be arranged on different surfaces.

The display unit 151 may also include a touch sensor which senses a touch input received at the display unit. When a touch is input to the display unit 151, the touch sensor may be configured to sense this touch and the controller 180, for example, may generate a control command or other signal corresponding to the touch. The content which is input in the touching manner may be a text or numerical value, or a menu item which can be indicated or designated in various modes.

The touch sensor may be configured in a form of a film having a touch pattern, disposed between the window 151a and a display on a rear surface of the window 151a, or a metal wire which is patterned directly on the rear surface of the window 151a. Alternatively, the touch sensor may be integrally formed with the display. For example, the touch sensor may be disposed on a substrate of the display or within the display.

The display unit 151 may also form a touch screen together with the touch sensor. Here, the touch screen may serve as the user input unit 123 (see FIG. 1A). Therefore, the touch screen may replace at least some of the functions of the first manipulation unit 123a.

The first audio output module 152a may be implemented in the form of a speaker to output voice audio, alarm sounds, multimedia audio reproduction, and the like.

The window 151a of the display unit 151 will typically include an aperture to permit audio generated by the first audio output module 152a to pass. One alternative is to allow audio to be released along an assembly gap between the structural bodies (for example, a gap between the window 151a and the front case 101). In this case, a hole independently formed to output audio sounds may not be seen or is otherwise hidden in terms of appearance, thereby further simplifying the appearance and manufacturing of the mobile terminal 100.

The optical output module 154 can be configured to output light for indicating an event generation. Examples of such events include a message reception, a call signal reception, a missed call, an alarm, a schedule notice, an email reception, information reception through an application, and the like. When a user has checked a generated event, the controller can control the optical output unit 154 to stop the light output.

The first camera 121a can process image frames such as still or moving images obtained by the image sensor in a capture mode or a video call mode. The processed image frames can then be displayed on the display unit 151 or stored in the memory 170.

The first and second manipulation units 123a and 123b are examples of the user input unit 123, which may be manipulated by a user to provide input to the mobile terminal 100. The first and second manipulation units 123a and 123b may also be commonly referred to as a manipulating portion, and may employ any tactile method that allows the user to perform manipulation such as touch, push, scroll, or the like. The first and second manipulation units 123a and 123b may also employ any non-tactile method that allows the user to perform manipulation such as proximity touch, hovering, or the like.

FIG. 1B illustrates the first manipulation unit 123a as a touch key, but possible alternatives include a mechanical key, a push key, a touch key, and combinations thereof.

Input received at the first and second manipulation units 123a and 123b may be used in various ways. For example, the first manipulation unit 123a may be used by the user to provide an input to a menu, home key, cancel, search, or the like, and the second manipulation unit 123b may be used by the user to provide an input to control a volume level being output from the first or second audio output modules 152a or 152b, to switch to a touch recognition mode of the display unit 151, or the like.

As another example of the user input unit 123, a rear input unit (not shown) may be located on the rear surface of the terminal body. The rear input unit can be manipulated by a user to provide input to the mobile terminal 100. The input may be used in a variety of different ways. For example, the rear input unit may be used by the user to provide an input for power on/off, start, end, scroll, control volume level being output from the first or second audio output modules 152a or 152b, switch to a touch recognition mode of the display unit 151, and the like. The rear input unit may be configured to permit touch input, a push input, or combinations thereof.

The rear input unit may be located to overlap the display unit 151 of the front side in a thickness direction of the terminal body. As one example, the rear input unit may be located on an upper end portion of the rear side of the terminal body such that a user can easily manipulate it using a forefinger when the user grabs the terminal body with one hand. Alternatively, the rear input unit can be positioned at most any location of the rear side of the terminal body.

Embodiments that include the rear input unit may implement some or all of the functionality of the first manipulation unit 123a in the rear input unit. As such, in situations where the first manipulation unit 123a is omitted from the front side, the display unit 151 can have a larger screen.

As a further alternative, the mobile terminal 100 may include a finger scan sensor which scans a user's fingerprint. The controller 180 can then use fingerprint information sensed by the finger scan sensor as part of an authentication procedure. The finger scan sensor may also be installed in the display unit 151 or implemented in the user input unit 123.

The microphone 122 is shown located at an end of the mobile terminal 100, but other locations are possible. If desired, multiple microphones may be implemented, with such an arrangement permitting the receiving of stereo sounds.

The interface unit 160 may serve as a path allowing the mobile terminal 100 to interface with external devices. For example, the interface unit 160 may include one or more of a connection terminal for connecting to another device (for example, an earphone, an external speaker, or the like), a port for near field communication (for example, an Infrared Data Association (IrDA) port, a Bluetooth port, a wireless LAN port, and the like), or a power supply terminal for supplying power to the mobile terminal 100. The interface unit 160 may be implemented in the form of a socket for accommodating an external card, such as Subscriber Identification Module (SIM), User Identity Module (UIM), or a memory card for information storage.

The second camera 121b is shown located at the rear side of the terminal body and includes an image capturing direction that is substantially opposite to the image capturing direction of the first camera unit 121a. If desired, second camera 121a may alternatively be located at other locations, or made to be moveable, in order to have a different image capturing direction from that which is shown.

The second camera 121b can include a plurality of lenses arranged along at least one line. The plurality of lenses may also be arranged in a matrix configuration. The cameras may be referred to as an "array camera." When the second camera 121b is implemented as an array camera, images may be captured in various manners using the plurality of lenses and images with better qualities.

As shown in FIG. 1C, a flash 124 is shown adjacent to the second camera 121b. When an image of a subject is captured with the camera 121b, the flash 124 may illuminate the subject.

As shown in FIG. 1B, the second audio output module 152b can be located on the terminal body. The second audio output module 152b may implement stereophonic sound functions in conjunction with the first audio output module 152a, and may be also used for implementing a speaker phone mode for call communication.

At least one antenna for wireless communication may be located on the terminal body. The antenna may be installed in the terminal body or formed by the case. For example, an antenna which configures a part of the broadcast receiving module 111 may be retractable into the terminal body. Alternatively, an antenna may be formed using a film attached to an inner surface of the rear cover 103, or a case that includes a conductive material.

A power supply unit 190 for supplying power to the mobile terminal 100 may include a battery 191, which is mounted in the terminal body or detachably coupled to an outside of the terminal body. The battery 191 may receive power via a power source cable connected to the interface unit 160. Also, the battery 191 can be recharged in a wireless manner using a wireless charger. Wireless charging may be implemented by magnetic induction or electromagnetic resonance.

The rear cover 103 is shown coupled to the rear case 102 for shielding the battery 191, to prevent separation of the battery 191, and to protect the battery 191 from an external impact or from foreign material. When the battery 191 is detachable from the terminal body, the rear case 103 may be detachably coupled to the rear case 102.

An accessory for protecting an appearance or assisting or extending the functions of the mobile terminal 100 can also be provided on the mobile terminal 100. As one example of an accessory, a cover or pouch for covering or accommodating at least one surface of the mobile terminal 100 may be provided. The cover or pouch may cooperate with the display unit 151 to extend the function of the mobile terminal 100. Another example of the accessory is a touch pen for assisting or extending a touch input to a touch screen.

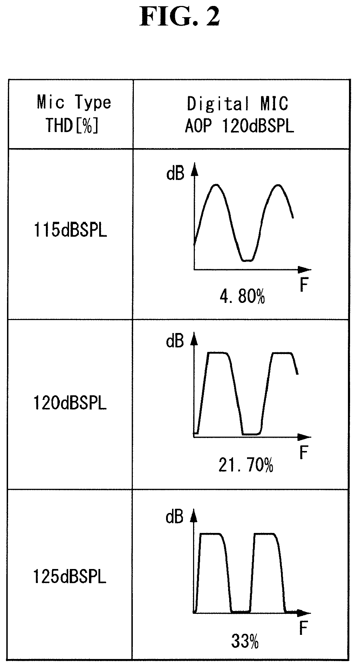

FIG. 2 illustrates a distortion rate of a sound signal according to the magnitude of AOP.

Acoustic Overload Point (or Sound Pressure Overload Point) may be defined as the largest acoustic signal magnitude that a microphone may receive without a distortion. Also, Total Harmonic Distortion (THD) of a microphone may be defined as a distortion ratio (%) accumulating the magnitudes of harmonic frequencies at integer multiples of a base signal.

In general, even if Sound Pressure Level (SPL) is increased, distortion of an acoustic signal received by a microphone does not increase significantly until the SPL reaches the AOP of the microphone.

Referring to FIG. 2, in the case of a microphone the AOP of which is 120 dBSPL, when sound pressure level of an input acoustic signal is 115 dBSPL, the distortion rate is 4.8%, which is not high. However, if sound pressure level of an input acoustic signal approaches the AOP of the microphone, which is 120 dBSPL, the distortion rate increases rapidly (from 4.8 % to 21.70 %), which makes recording of ambient audio signals difficult in a noisy environment. If the sound pressure level of an input acoustic signal exceeds the AOP and reaches 125 dBSPL, the distortion rate becomes even higher. Therefore, in order to recognize an external audio signal without a signal distortion in a noisy environment, high AOP is required. However, even if a microphone with AOP larger than a predetermined level is used, it is often the case that magnitude of an external audio signal exceeds the AOP of the microphone, which, in this case, signal distortion is unavoidable.

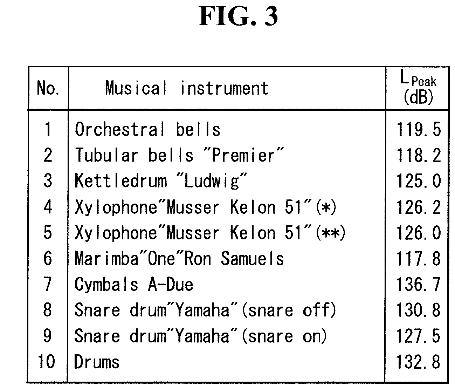

FIG. 3 illustrates peak magnitude of an audio signal generated according to an external audio signal source to be recorded.

Referring to FIG. 3, in the case of a microphone of which the AOP shown in FIG. 2 is 120 dBSPL, sound of musical instrument no. 1 (119.5 dB), no. 2 (118.2 dB), and no. 6 (117.8 dB) may be recognized with almost no distortion. However, if sound of a musical instrument exceeds 130 dB as the musical instrument no. 3 to 5, particularly, no. 7 to 10, signal distortion is unavoidable during a process for recording a sound generated by the corresponding musical instrument. Moreover, when a recorded signal is played back, a tearing sound may be generated, or the corresponding sound may be discontinued. In particular, the loudest sound that may be generated from playing drums or a rock festival easily exceeds 130 dB, and in the case of a loud sound higher than the AOP of a microphone, that sound may be clipped and recorded as a saturated signal when a video is captured.

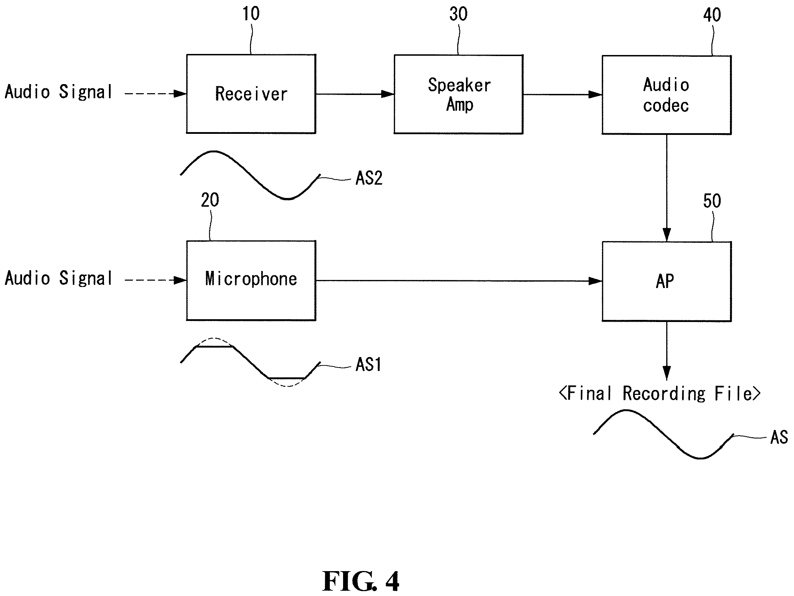

FIG. 4 is a block diagram of a mobile terminal performing an operation of compensating for a distorted input by using a signal delivered to a receiver according to one embodiment of the present invention.

Referring to FIG. 4, a mobile terminal according to one embodiment of the present invention may include a receiver 10, microphone 20, speaker amp 30 (or amplifier), audio codec 40, and Application Processor (AP) 50.

The receiver 10 outputs an audio signal from a voice talk during a call connection. Meanwhile, a diaphragm of the receiver 10 vibrates according to an acoustic wave in the same way as the microphone 20, and the receiver operates on the principle that when a coil connected to the diaphragm moves in the magnetic field, magnitude of induced electromotive forces generated at both ends of the coil is proportional to the moving speed of the coil.

The positions of coils, resistors, diaphragm, magnets, and so on are the same in the receiver 10 and the microphone 20; a difference lies in the source of power, where the receiver uses electric energy while the microphone uses acoustic energy. Moreover, the receiver 10 and the microphone 20 differ in the size of the diaphragm used. Since the diaphragm of the receiver 10 is larger than that of the microphone 20 for most cases, the receiver 10 is capable of receiving a sound without saturation AS2. In the case of the microphone 20, however, the size of the diaphragm is designed to be relatively small; therefore, if input sound pressure level is larger than a predetermined level with respect to the AOP of the microphone 20, clipping is occurred, and thereby a distortion is generated during a recording process AS1.

For the same external audio signal, a signal input to and recognized by the microphone 20 is referred to as a first external audio signal AS1 while a signal input to and recognized by the receiver 10 is referred to as a second external audio signal AS2.

According to one embodiment of the present invention, a second external audio signal AS2 input to the receiver 10 is not simply outputted to the output stage of the receiver but is fed to the speaker amp 30. In other words, when the mobile terminal 100 is operating in a recording mode of an external audio signal rather than in a call mode, the speaker amp 30 is operated in an activated state, and the second external audio signal AS2 is fed to the input stage of the speaker amp 30. Meanwhile, when the mobile terminal 100 is operating in the call mode, the speaker amp 30 is kept to be in an inactive state; therefore, an external acoustic signal input through the receiver 10 is outputted immediately through the output stage of the receiver. In other words, in the call mode, an acoustic signal input to the receiver 10 is outputted so that the acoustic signal may be transmitted directly to the user's ear.

The speaker amp 30 may amplify the second external audio signal AS2 to have a predetermined magnitude so that the second external audio signal may be outputted through the speaker.

The audio codec 40 may convert the second external audio signal AS2 input to the receiver 10 into a digital signal and convert the digital signal into an acoustic signal.

Meanwhile, when a first external audio signal AS1 input to the microphone 20 is clipped, the AP 50 may synthesize the first AS1 and the second external audio signal AS2 to compensate for the distorted first external audio signal AS1. For example, the receiver receives an acoustic signal exceeding a threshold AOP of the microphone 20, and when clipping occurs, the AP 50 may compensate for the clipped portion by using the signal received by the receiver. By recovering the clipped portion through signal synthesis, a distortion-free, normal acoustic signal AS may be generated. The AP 50 may be a microprocessor. Moreover, the controller 180 of the present disclosure may include one or more processors and may include the AP 50.

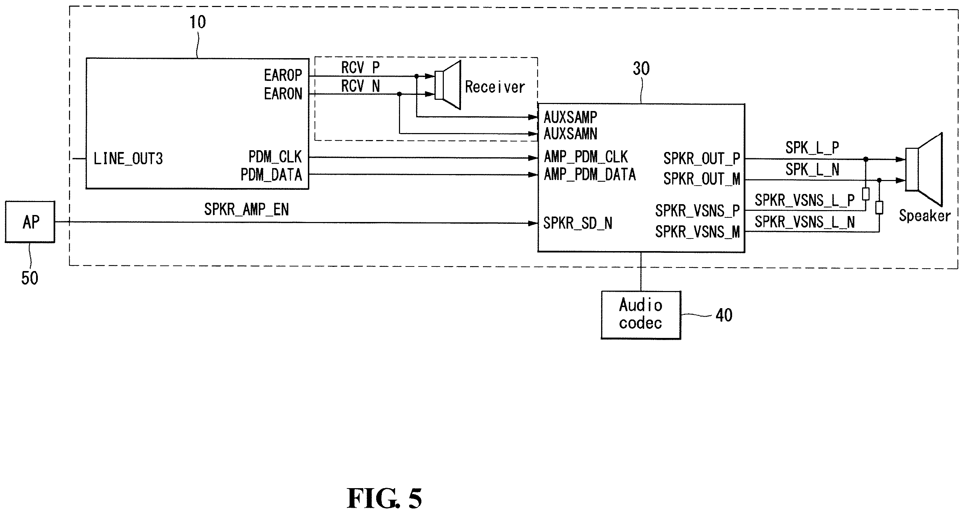

FIG. 5 illustrates in more detail a connection layout between a receiver and a speaker amp according to one embodiment of the present invention.

Referring to FIG. 5, the AP 50 may determine whether to activate the speaker amp 30 according to the operation mode of the mobile terminal 100. In other words, when the mobile terminal 100 operates in a recording mode, the AP 50 provides a speaker amp enable signal to the speaker amp 30 so that the speaker amp 30 may receive the input signal of the receiver 10 block.

Here, the recording mode may include any operation mode for recording an external audio signal. For example, when the controller 180 of the mobile terminal 100 executes a camera to shoot a video, an external acoustic signal may be picked up and recorded through the microphone and/or the receiver during video shooting. Also, for example, the recording mode may include a case in which the controller 180 of the mobile terminal 100 operates in a voice recording mode without involving image recording. However, as described above, since the speaker amp is deactivated when the mobile terminal 100 is connected for a voice call and a voice talk is recorded, the aforementioned case does not belong to the recording mode in this document.

The receiver 10 does not provide the input second external audio signal simply to the output stage of the receiver but instead to the speaker amp 30. The output stage of the receiver is connected to the input stage of the speaker amp 30, and a distortion-free, second external audio signal is delivered to the input stage of the speaker amp 30.

Meanwhile, the AP 50 synthesizes the first external audio signal received from the microphone 20 and the second external audio signal received from the receiver 10, described with reference to FIG. 4, and generates a distortion-free, new recording signal by compensating for a clipped portion of the first external audio signal.

Meanwhile, the controller 180 may store the first and the second external audio signal in the storage unit. When magnitude of the first external audio signal is less than a predetermined AOP value of the microphone 20, the controller 180 may store the first external audio signal itself as the recording signal. Meanwhile, when the controller 180 detects that magnitude of the first external audio signal exceeds the AOP value of the microphone or the corresponding value, the controller 180 may generate a distortion-free recording signal by synthesizing the first and the second external audio signal and store the distortion-free recording signal in the storage unit. The memory 170 may include one or more memory devices and may include the storage unit.

The speaker amp 30 amplifies an input acoustic signal to have a predetermined magnitude on the basis of nominal output magnitude of the speaker, but to prevent the input acoustic signal from being amplified beyond the nominal output magnitude allowed for the speaker and destroying the speaker, a feedback circuit may be formed in the output stage of the speaker amp 30. The feedback circuit includes an IV sensing unit sensing current and voltage value of a signal outputted from the amplification and controls attenuation of an output signal so that the magnitude of the output signal may be kept to be below the nominal output magnitude.

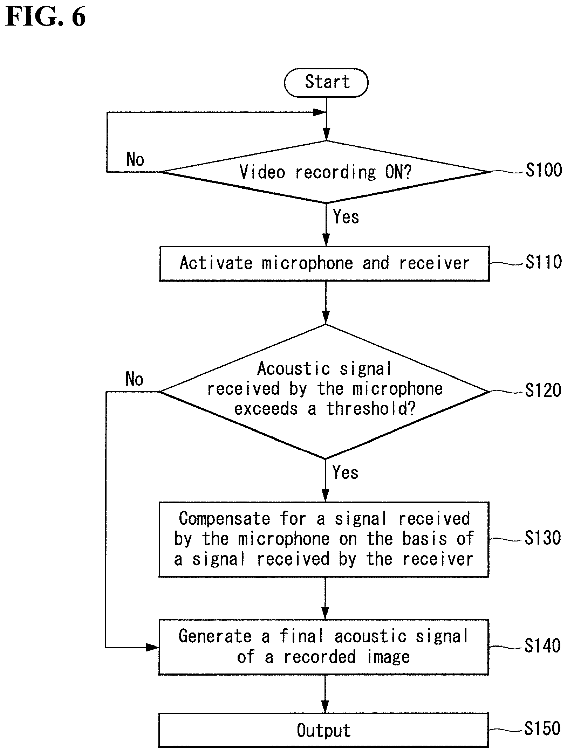

FIG. 6 is a flow diagram of a method for controlling a mobile terminal generating a normal signal by compensating for signal distortions on the basis of an audio signal received by a receiver of the mobile terminal according to one embodiment of the present invention.

Referring to FIG. 6, the controller 180 may determine whether the mobile terminal is in the call mode or in the recording mode excluding the call mode S100. When the mobile terminal operates in the recording mode, the controller 180 controls the microphone 20 and the receiver 10 to be activated. Here, activation of the receiver 10 may imply activation of the speaker amp so that an external audio signal received through the receiver 10 is fed to the speaker amp. The controller 180 delivers a speaker amp enable signal to the speaker amp.

The controller 180 may determine whether an acoustic signal received through the microphone 20 exceeds a threshold S120. The controller 180 may compare the magnitude of a signal received through the microphone 20 with a unique AOP value of the microphone 20 and if it is determined that the received signal exceeds the AOP S120: YES, perform an operation of compensating for the external audio signal received by the microphone on the basis of the external audio signal received by the receiver 10, S130.

The controller 180 performs the compensation process by synthesizing a distorted external audio signal received by the microphone and a distortion-free external audio signal received by the receiver, thereby generating a final acoustic signal of a recorded image S140.

Meanwhile, when recorded contents are played according to an input requesting playing of a recorded signal, the controller 180 outputs the final acoustic signal through the speaker S150.

Even though a microphone having an increasingly higher AOP may be installed as performance of the microphone 20 for the mobile terminal 100 is improved, there may always be an external acoustic environment which generates a signal exceeding the AOP value of the microphone installed. Therefore, according to one embodiment of the present invention, when a predetermined saturation occurs as the output stage of the receiver is configured to be connected to the input stage of the speaker amp in a hardware point of view, and an acoustic signal received by the microphone exceeds the AOP value in a software point of view, the saturation may be controlled to be compensated for by using a distortion-free receiver input signal. Accordingly, even in an acoustic environment generating a loud sound, without changing the physical AOP of the microphone, distortion-free recording contents may be generated through simple signal synthesis by extending the Tx function of a conventional receiver to the Rx function.

Various embodiments may be implemented using a machine-readable medium having instructions stored thereon for execution by a processor to perform various methods presented herein. Examples of possible machine-readable mediums include HDD(Hard Disk Drive), SSD(Solid State Disk), SDD(Silicon Disk Drive), ROM, RAM, CD-ROM, a magnetic tape, a floppy disk, an optical data storage device, the other types of storage mediums presented herein, and combinations thereof. If desired, the machine-readable medium may be realized in the form of a carrier wave (for example, a transmission over the Internet). The processor may include the controller 180 of the mobile terminal.

Accordingly, an object of the present invention is to address the above-noted and other problems.

An object of the present invention is to provide a mobile terminal providing a user interface by which a user can control the mobile terminal easily and efficiently and a method of controlling the same.

To solve the aforementioned problem, an object of the present invention is to provide a mobile terminal capable of compensating for a distorted audio signal with a phase-leading signal by using a receiver as a microphone.

Also, an object of the present invention is to provide a mobile terminal capable of securing distortion-free recording quality by overcoming the limitation of a microphone having a predetermined Acoustic Overload Point (AOP) through a receiver during a video shooting or voice recording process.

A mobile terminal according to one aspect of the present invention includes a recording unit recording a received external audio signal; a speaker outputting contents generated by the recorded signal; a microphone having a predetermined Acoustic Overload Point (AOP) and receiving the external audio signal; a receiver outputting an audio signal from a voice talk during a call connection and receiving the external audio signal; a speaker amp having an input stage being connected to an output stage of the receiver and receiving the external audio signal received from the receiver and amplifying the received external audio signal to a predetermined magnitude sound; and a controller, when a first external audio signal received from the microphone is larger than the predetermined AOP, generating a recording signal generated by compensating for a clipping portion of the first external audio signal by using a second external audio signal received by the receiver.

The mobile terminal may further include an audio codec converting an analog external audio signal received from the speaker amp to a digital signal.

The recording unit may include a camera, and contents generated by the recorded signal may be video contents recorded through the camera.

The recording unit may be integrated with the microphone to record a user's voice.

The predetermined AOP may range from 130 dB to 135 dB.

The speaker amp may further include a feedback circuit being connected to an input stage of the speaker and one end of the speaker amp, detecting magnitude of the amplified external audio signal, comparing the detected amplified external audio signal with a threshold output of the speaker, and controlling magnitude of the external audio signal outputted to the speaker.

When an input for playing the recorded contents is received, the controller may output the recording signal generated by compensating for the clipping portion through the speaker.

The mobile terminal may further include a storage unit storing the first external audio signal and the second audio signal, wherein the controller may store the first external audio signal itself as the recording signal when magnitude of the first external audio signal is less than the predetermined AOP.

A mobile terminal according to the present invention provides advantageous effects as follows.

According to the present invention, a receiver is used as a microphone, thereby compensating for a distorted audio signal to a normal signal.

Also, according to the present invention, distortion-free recording quality may be secured by overcoming the limitation of a microphone having predetermined Acoustic Overload Point (AOP) through a receiver during a video shooting or voice recording process.

With the mobile terminal and the method of controlling the same according to the present invention, the following effects are obtained.

The foregoing embodiments are merely exemplary and are not to be considered as limiting the present disclosure. The present teachings can be readily applied to other types of methods and apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

As the present features may be embodied in several forms without departing from the characteristics thereof, it should also be understood that the above-described embodiments are not limited by any of the details of the foregoing description, unless otherwise specified, but rather should be considered broadly within its scope as defined in the appended claims, and therefore all changes and modifications that fall within the metes and bounds of the claims, or equivalents of such metes and bounds, are therefore intended to be embraced by the appended claims.

It will be understood that when an element or layer is referred to as being "on" another element or layer, the element or layer can be directly on another element or layer or intervening elements or layers. In contrast, when an element is referred to as being "directly on" another element or layer, there are no intervening elements or layers present. As used herein, the term "and/or" includes any and all combinations of one or more of the associated listed items.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section could be termed a second element, component, region, layer or section without departing from the teachings of the present invention.

Spatially relative terms, such as "lower", "upper" and the like, may be used herein for ease of description to describe the relationship of one element or feature to another element(s) or feature(s) as illustrated in the figures. It will be understood that the spatially relative terms are intended to encompass different orientations of the device in use or operation, in addition to the orientation depicted in the figures. For example, if the device in the figures is turned over, elements described as "lower" relative to other elements or features would then be oriented "upper" relative the other elements or features. Thus, the exemplary term "lower" can encompass both an orientation of above and below. The device may be otherwise oriented (rotated 90 degrees or at other orientations) and the spatially relative descriptors used herein interpreted accordingly.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Embodiments of the disclosure are described herein with reference to cross-section illustrations that are schematic illustrations of idealized embodiments (and intermediate structures) of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

## Claims

1. A mobile terminal configured to record an external audio signal, comprising:
a microphone configured to receive the external audio signal to generate a first audio signal, the microphone having a prescribed Acoustic Overload Point, AOP;
a receiver configured for receiving voice audio during a call, the receiver configured to receive the external audio signal to generate a second audio signal;
a speaker amplifier coupled to the receiver and having an input stage that is connected to an output stage of the receiver and configured to amplify the second audio signal to a prescribed magnitude; and
a controller configured to synthesize the first audio signal and the second audio signal,
wherein the controller determines whether a level of the first audio signal at the microphone is greater than the prescribed AOP such that clipping occurs in the first audio signal, and generates the third audio signal by compensating for clipping in the first audio signal by using the second audio signal from the receiver.

2. The mobile terminal of claim 1, further comprising an audio codec configured to convert an analog external audio signal received from the speaker amplifier to a digital signal.

3. The mobile terminal of claim 1, or 2, further comprising recording module that records the external audio signal, the recording module including a camera that includes the microphone and contents generated by the recording module includes video content recorded through the camera.

4. The mobile terminal of claim 3, wherein the recording module is configured to be integrated with the microphone to record a user's voice.

5. The mobile terminal of any one of the preceding claims, wherein the prescribed AOP ranges from 130 dB to 135 dB.

6. The mobile terminal of any one of the preceding claims, wherein the speaker amplifier includes a feedback circuit that is connected to an input stage of the speaker and an output of the speaker amplifier, and configured to detect a magnitude of the amplified second audio signal, compare the detected amplified second audio signal with a threshold output of the speaker, and control the magnitude of the second audio signal.

7. The mobile terminal of any one of the preceding claims, wherein, when an input for playing recorded contents is received, the controller is configured to output the third output signal which is compensated for clipping through the speaker.

8. The mobile terminal of any one of the preceding claims, further comprising a storage configured to store the first audio signal and the second audio signal, wherein the controller is configured to store the first audio signal itself as a recording signal when magnitude of the first audio signal is less than the prescribed AOP.

9. The mobile terminal of any one of the preceding claims, wherein the receiver is configured to output audio during a call.

10. The mobile terminal of claim 9, wherein the microphone is integrated with a video camera and configured to receive the external audio signals corresponding to recorded video.

11. The mobile terminal of any one of the preceding claims, wherein a size of a diaphragm of the receiver is greater than a size of a diaphragm of the microphone.

12. The mobile terminal of any one of the preceding claims, wherein the receiver is configured to operate in a voice call mode and an external audio recording mode, wherein the controller is configured to activate the speaker amplifier in the external audio recording mode and deactivate the speaker amplifier in the voice call mode.

13. The mobile terminal of any one of the preceding claims, wherein,
when the level of first audio signal is less than the AOP of the microphone, the first audio signal is stored as a recording of the external audio signal, and
when the level of the first audio signal is greater than the AOP of the microphone, the first audio signal is synthesized with the second audio signal and the third audio signal is stored as a recording of the external audio signal.
